# EUROPÄISCHE PATENTSCHRIFT

(11) **EP 2 978 630 B1**
(45) Veröffentlichungstag und Bekanntmachung des Hinweises auf die Patenterteilung: **05.10.2016**
(21) Anmeldenummer: 14712000.0
(22) Anmeldetag: 25.03.2014
(51) Int. Cl.: B60N 2/235, B60N 2/22

(54) **VERSTELLVORRICHTUNG UND VERFAHREN ZUR HERSTELLUNG EINER VERSTELLVORRICHTUNG**
ADJUSTING DEVICE AND METHOD FOR PRODUCING AN ADJUSTING DEVICE
DISPOSITIF DE RÉGLAGE ET PROCÉDÉ DE PRODUCTION D'UN DISPOSITIF DE RÉGLAGE

(30) Priorität: 26.03.2013 DE 102013005132; 04.06.2013 DE 102013009272
(43) Veröffentlichungstag der Anmeldung: 03.02.2016
(73) Patentinhaber: Johnson Controls Components GmbH & Co. KG, 67657 Kaiserslautern (DE)
(72) Erfinder: LEHMANN, Ulrich, 53347 Alfter (DE); HILLE, Gunther, 42897 Remscheid (DE)
(74) Vertreter: Liedhegener, Ralf
(86) Internationale Anmeldenummer: PCT/EP2014/055943
(87) Internationale Veröffentlichungsnummer: WO 2014/154680

(56) Entgegenhaltungen:
- DE-A1-102005 054 489
- FR-A1- 2 258 817

## Beschreibung

### Stand der Technik

Die vorliegende Erfindung geht aus von einer Verstellvorrichtung zum Verstellen einer Fahrzeugsitzkomponente gemäß dem Oberbegriff des Anspruchs 1 und einem Verfahren zur Herstellung einer Verstellvorrichtung gemäss dem Oberbegriff des Anspruchs 8.

Solche Verstellvorrichtungen sind allgemein bekannt, beispielsweise aus der Druckschrift DE 10 2005 054 489 A1. Dabei wird üblicherweise eine Komponente der Verstellvorrichtung an einem erstem Fahrzeugsitzteil und eine weitere Komponente an einem relativ zu dem ersten Fahrzeugteil zu verstellenden zweiten Fahrzeugteil befestigt. Die Verstellvorrichtung lässt sich über ein Rad oder eine Klinke bedienen und über ein Verstellgetriebe der Verstellvorrichtung werden die beiden Komponenten gegeneinander bewegt.

Dabei sind solche Verstellvorrichtungen üblicherweise derart konzipiert, dass eine unbeabsichtigte Verstellung, beispielsweise auf Grund von Vibrationen, ausgeschlossen wird, aber eine bestimmungsgemäße Verstellung möglichst einfach erfolgt. Daher sind gemäß dem Stand der Technik Bremsen vorgesehen, die mit einer oder beiden Komponenten in Kontakt stehen. In einem stationären Zustand wird eine unbeabsichtigte Verstellung durch eine Haftreibung der Bremsen mit den Komponenten verhindert. Dazu ist es vorteilhaft, wenn Bremse und Komponente aus dem gleichen Material gefertigt sind, da der Haftreibungskoeffizient in diesem Fall groß ist. Andererseits soll der Gleitreibungskoeffizient möglichst gering sein, damit bei einer beabsichtigten Verstellung die Bremse möglichst reibungsfrei mit der Komponente interagiert. Dazu wird in der Regel auf die Bremse und/oder die Komponente eine Beschichtung aufgebracht, die die Gleitreibung verringert. Diese Beschichtung besteht üblicherweise aus einem anderen Material und verringert daher die Haftreibung.

### Offenbarung der Erfindung

Es ist die Aufgabe der vorliegenden Erfindung, eine Verstellvorrichtung der eingangs genannten Art zur Verfügung zu stellen, bei der aneinander ablaufende Komponenten einen hohen Haftreibungskoeffizienten bei gleichzeitig geringem Gleitreibungskoeffizienten aufweisen.

Gelöst wird diese Aufgabe mit einer Verstellvorrichtung, insbesondere für die Lehnenneigungsverstellung eines Fahrzeugsitzes, wobei die Verstellvorrichtung ein erstes Beschlagteil und ein zweites Beschlagteil aufweist, wobei das erste Beschlagteil relativ zu dem zweiten Beschlagteil um eine Drehachse drehbar ist, wobei die Verstellvorrichtung wenigstens ein Kopplungsmittel zur Kopplung des ersten Beschlagteils und des zweiten Beschlagteils aufweist, wobei wenigstens ein Teil einer Oberfläche des Kopplungsmittels und/oder des ersten Beschlagteils und/oder des zweiten Beschlagteils eine Strukturierung aufweist, wobei die Strukturierung in einem ersten Kontaktbereich zwischen dem Kopplungsmittel und dem ersten Beschlagteil und/oder in einem zweiten Kontaktbereich zwischen dem Kopplungsmittel und dem zweiten Beschlagteil ausgebildet ist, wobei das Kopplungsmittel und das erste Beschlagteil und/oder das zweite Beschlagteil aus dem gleichen Material gefertigt sind.

Die erfindungsgemäße Verstellvorrichtung hat gegenüber dem Stand der Technik den Vorteil, dass durch die Strukturierung die Reibungsverhältnisse beim Betrieb der erfindungsgemäßen Verstellvorrichtung optimiert werden. Dabei soll unter dem Wortlaut "optimieren" im Sinne der vorliegenden Erfindung verstanden werden, dass die Verstellvorrichtung gegenüber einem unbeabsichtigten Verstellen, beispielsweise durch Vibrationen, möglichst starr ausgebildet ist, also eine hohe Haftreibung aufweist, während ein beabsichtigtes Verstellen zu einer möglichst reibungsarmen Bewegung, also insbesondere Drehung, führt, die Gleitreibung also möglichst gering ist. Dies ermöglicht einen einfacheren und sichereren Betrieb der Verstellvorrichtung. Im Vergleich zu einer unstrukturierten Verstellvorrichtung wird weniger Schmierstoff, beispielsweise Öl, benötigt. Weisen sowohl das Kopplungsmittel als auch das erste Beschlagteil und/oder das zweite Beschlagteil eine Strukturierung auf, können die Reibungsverhältnisse noch weiter verbessert werden. Erfindungsgemäß ist die Strukturierung in einem ersten Kontaktbereich zwischen dem Kopplungsmittel und dem ersten Beschlagteil und/oder in einem zweiten Kontaktbereich zwischen dem Kopplungsmittel und dem zweiten Beschlagteil ausgebildet. Hierdurch sind vorteilhafterweise zur Reibung beim Abwälzen beitragende Oberflächen strukturiert. Vorzugsweise ist die Strukturierung derart ausgebildet, dass die strukturierte Oberfläche einen geringeren Gleitreibungskoeffizienten aufweist als im unstrukturierten Zustand. Hierdurch wird eine verschleißarme und einfach zu bedienende Verstellvorrichtung bereitgestellt. Bessere Gleiteigenschaften sind zum Beispiel dadurch erzielbar, dass solche durch Strukturierung erzeugten Strukturen als Schmierstoffreservoire dienen, wodurch eine bessere Schmierung der aneinander reibenden Komponenten ermöglicht wird. Insbesondere sind dazu fluide Schmierstoffe vorgesehen. Weiterhin sind das Kopplungsmittel und das erste Beschlagteil und/oder das zweite Beschlagteil erfindungsgemäß aus dem gleichen Material gefertigt. Vorzugsweise sind das Kopplungsmittel und das erste Beschlagteil und/oder das zweite Beschlagteil aus einem Material mit einem hohen Haftreibungskoeffizienten gefertigt, insbesondere Aluminium. Hierdurch wird in besonders vorteilhafter Weise eine gute Haftreibung im Sinne eines großen Haftreibungskoeffizienten realisiert, während die Strukturierung so gewählt ist, dass gleichzeitig eine möglichst niedrige Gleitreibung im Sinne eines kleinen Gleitreibungskoeffizienten auftritt. Dadurch wird eine besonders verschleißarme und kostengünstig zu produzierende Verstellvorrichtung bereitgestellt. Eine Verstellvorrichtung gemäß dem Stand der Technik sowie ein Taumelgetriebe sind ausführlich in der deutschen Offenlegungsschrift DE 10 2005 054 489 A1 offenbart. Die Offenbarung der DE 10 2005 054 489 A1 soll explizit in den Offenbarungsinhalt der vorliegenden Anmeldung aufgenommen werden. Als Strukturierung sind beispielsweise Kugeln oder halbkugelartige Einbuchtungen der Oberfläche realisierbar.

Vorteilhafte Ausführungsformen sind der Figurenbeschreibung und/oder den Zeichnungen zu entnehmen.

Gemäß einer bevorzugten Ausführungsform weist die Verstellvorrichtung ein Verstellgetriebe auf zur Steuerung der Drehung des ersten Beschlagteils oder des zweiten Beschlagteils. Hierdurch ist es in vorteilhafter Weise möglich, eine einfache Betätigung der Verstellvorrichtung, insbesondere mit einer Übersetzung, bereitzustellen. Besonders bevorzugt ist das Verstellgetriebe ein Taumelgetriebe. Dadurch ist es vorteilhafterweise möglich, ein bekanntes und erprobtes Getriebe zu verwenden und so die Herstellungskosten gering zu halten. Ganz besonders bevorzugt ist das Kopplungsmittel derart konfiguriert, dass durch Haftreibung die Drehung bis zu einem gewissen Drehmoment blockiert wird.

Gemäß einer bevorzugten Ausführungsform ist wenigstens in einem Teil der durch die Strukturierung erzeugten Strukturen ein Schmierstoff vorgesehen. Besonders bevorzugt ist der Schmierstoff ein fluider Schmierstoff, insbesondere ein hochviskoser Schmierstoff, ein Schmierfett und/oder ein gasförmiger Schmierstoff. Ganz besonders bevorzugt ist der Schmierstoff ein Schmieröl. Der Fachmann versteht, dass als Schmieröle insbesondere solche gemäß der so genannten API-Klassifikation API GL-1 bis API GL-5 einsetzbar sind. Hierdurch ist es in besonders vorteilhafter Weise möglich, ohne Gleitlacke oder Festschmierstoffe, deren Ein- bzw. Aufbringung üblicherweise kompliziert und zeitaufwändig ist, eine Verstellvorrichtung mit niedrigen Gleitreibungskoeffizienten und gleichzeitig hohen Haftreibungskoeffizienten bereitzustellen.

Ein weiterer Gegenstand der vorliegenden Erfindung ist ein Verfahren zur Herstellung einer Verstellvorrichtung, vorzugsweise zur Herstellung einer erfindungsgemäßen Verstellvorrichtung, wobei in einem ersten Verfahrensschritt ein Kopplungsmittel und ein erstes Beschlagteil und ein zweites Beschlagteil der Verstellvorrichtung gefertigt werden, wobei in dem ersten Verfahrensschritt das Kopplungsmittel und das erste Beschlagteil und/oder das zweite Beschlagteil aus dem gleichen Material gefertigt werden, wobei in einem zweiten Verfahrensschritt wenigstens ein Teil einer Oberfläche des Kopplungsmittels und/oder des ersten Beschlagteils und/oder des zweiten Beschlagteils strukturiert wird, wobei die Strukturierung in einem ersten Kontaktbereich zwischen dem Kopplungsmittel und dem ersten Beschlagteil und/oder in einem zweiten Kontaktbereich zwischen dem Kopplungsmittel und dem zweiten Beschlagteil vorgenommen wird, wobei in einem dritten Schritt das erste Beschlagteil und das zweite Beschlagteil und das Kopplungsmittel zu einer Verstellvorrichtung montiert werden.

Hierdurch ist es in vorteilhafter Weise möglich, eine reibungsoptimierte Verstellvorrichtung einfach und schnell herzustellen. Die Strukturierung erfordert weniger Zeitaufwand als eine Beschichtung und erfordert vorteilhafterweise keine Nachbehandlung. Schmierstoffreservoire können somit geometrisch exakt bereitgestellt werden. Erfindungsgemäß wird die Strukturierung in einem ersten Kontaktbereich zwischen dem Kopplungsmittel und dem ersten Beschlagteil und/oder in einem zweiten Kontaktbereich zwischen dem Kopplungsmittel und dem zweiten Beschlagteil vorgenommen. Hierdurch werden vorteilhafterweise insbesondere zur Reibung vorgesehene Oberflächen des Kopplungsmittels und/oder des ersten Beschlagteils und/oder des zweiten Beschlagteils strukturiert.

Gemäß einer bevorzugten Ausführungsform weist das Oberflächenmaterial bei gleichbleibendem Haftreibungskoeffizienten einen geringeren Gleitreibungskoeffizienten auf als im unstrukturierten Zustand. Hierdurch ist es in vorteilhafter Weise möglich, eine verschleißarme und einfach zu bedienende Verstellvorrichtung bereitzustellen.

Gemäß einer bevorzugten Ausführungsform werden in dem ersten Verfahrensschritt das Kopplungsmittel und das erste Beschlagteil und/oder das zweite Beschlagteil aus dem gleichen Material gefertigt. Hierdurch wird in besonders vorteilhafter Weise eine gute Haftreibung im Sinne eines großen Haftreibungskoeffizienten ermöglicht.

Gemäß einer bevorzugten Ausführungsform wird im zweiten Schritt zur Strukturierung der Oberflächen eine direkte Laserinterferenzstrukturierung verwendet, wobei in einem ersten Teilschritt zwei kohärente und kollimierte Laserstrahlen, insbesondere der gleichen Laserquelle, auf den zu strukturierenden Oberflächen im Bereich einer Strukturierungszone überlagert werden, wobei in einem zweiten Teilschritt die Strukturierungszone durch Bewegung der Laserstrahlen und/oder der zu strukturierenden Oberfläche erzeugt wird. Hierdurch ist es in besonders vorteilhafter Weise möglich, ein besonders einfaches, flexibles und kostengünstiges Verfahren zu verwenden. Im Gegensatz zu gängigen Beschichtungsverfahren erfordert eine direkte Laserinterferenzstrukturierung kein Vakuum oder ein spezielles umgebendes Medium, so dass das Verfahren deutlich kostengünstiger und schneller als ein herkömmliches Beschichtungsverfahren ist. Ferner ist sowohl die Größe der zu strukturierenden Fläche als auch die Strukturgröße bei der direkten Laserinterferenzstrukturierung in einem gewissen Rahmen flexibel einstellbar, so dass in vorteilhafter Weise das Verfahren auf unterschiedlichste Komponenten und für unterschiedlichste Strukturen anwendbar ist.

Gemäß einer bevorzugten Ausführungsform liegt die Strukturierungszone, projiziert auf die zu strukturierenden Oberflächen, in der Größenordnung von 1mm² bis 10'000mm², insbesondere in der Größenordnung von 10mm² oder 100mm² oder 1000mm². Hierdurch ist in vorteilhafter Weise eine flexible Anwendung auf verschiedene Oberflächengrößen möglich.

Gemäß einer bevorzugten Ausführungsform wird die Strukturierung mit einer Geschwindigkeit zwischen 1cm²/s und 100cm²/s durchgeführt. Durch die hohen Prozessgeschwindigkeiten wird in vorteilhafter Weise die Gesamtprozesszeit der Herstellung einer erfindungsgemäßen Verstellvorrichtung reduziert. Ferner ist in vorteilhafter Weise je nach Komplexität und/oder Größe der aufzubringenden Strukturen eine Anpassung der Prozessgeschwindigkeit möglich.

Gemäß einer bevorzugten Ausführungsform erfolgt die Strukturierung in einer Größenordnung von 1 nm bis 100µm. Darunter soll verstanden werden, dass die erzeugten und/oder aufzubringenden Strukturen eine Größenordnung von 1 nm bis 100µm aufweisen. Hierdurch ist es in vorteilhafter Weise möglich, in einem Verfahrensschritt eine Vielzahl von sehr kleinen Strukturen aufzubringen, wodurch einerseits die Reibungseigenschaften der Oberfläche sehr genau steuerbar sind und andererseits die Prozessgeschwindigkeit erheblich erhöht wird.

Gemäß einer bevorzugten Ausführungsform wird in dem zweiten und/oder dritten Schritt ein Schmierstoff in wenigstens einen Teil der strukturierten Oberfläche eingebracht. Besonders bevorzugt wird der Schmierstoff in Einbuchtungen der Strukturierung eingebracht. Ganz besonders bevorzugt wird der Schmierstoff auf der Oberfläche im Bereich der Strukturierung angeordnet. Der Fachmann versteht, dass im montierten Zustand oder im Betrieb durch den Kontakt der Oberflächen des Kopplungsmittels und des ersten Beschlagteils und/oder des zweiten Beschlagteils der Schmierstoff automatisch verteilt wird.

Ein weiterer Gegenstand der vorliegenden Erfindung ist ein Fahrzeugsitz mit einer erfindungsgemäßen Verstellvorrichtung. Hierdurch ist es vorteilhafter Weise möglich, einen Fahrzeugsitz mit einer besonders einfach zu bedienenden Verstellvorrichtung bereitzustellen.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Skizze gemäß einer beispielhaften ersten Ausführungsform der vorliegenden Erfindung.
- **Figur 2**: zeigt eine schematische Prinzipskizze einer beispielhaften zweiten Ausführungsform der vorliegenden Erfindung.
- **Figur 3**: zeigt eine schematische Detailansicht einer beispielhaften dritten Ausführungsform der vorliegenden Erfindung.
- **Figur 4**: zeigt eine schematische Explosionsdarstellung der beispielhaften dritten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

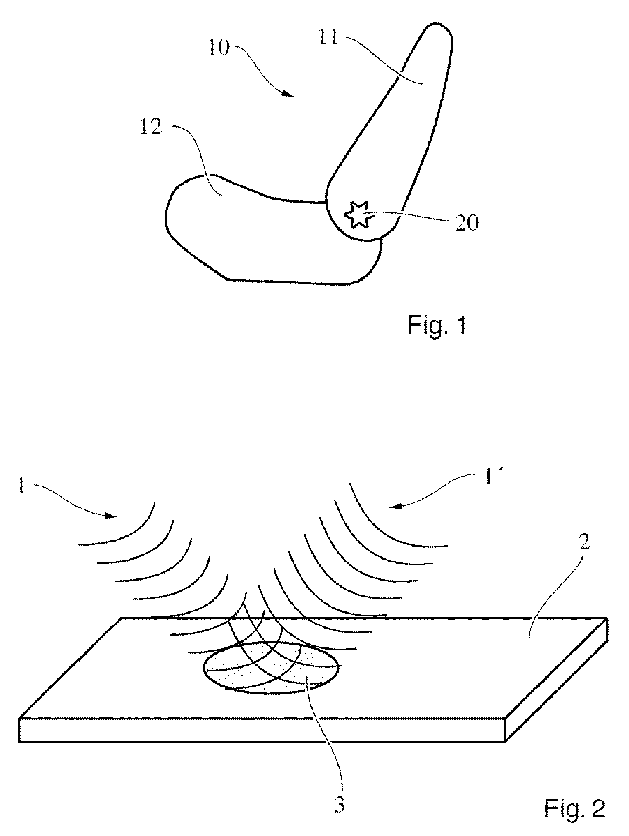

In **Figur 1** ist eine schematische Skizze gemäß einer beispielhaften Ausführungsform der vorliegenden Erfindung dargestellt. Ein Fahrzeugsitz 10 weist ein Sitzteil 12 auf sowie eine mit dem Sitzteil 12 drehbar verbundene Rückenlehne 11. Die Drehung der Rückenlehne 11 um das Sitzteil 12 wird durch eine Verstellvorrichtung 20 bewirkt. Die Verstellvorrichtung 20 weist hier ein schematisch dargestelltes Handrad auf, welches bei einer Drehung durch einen Benutzer die Rückenlehne 11 in Richtung des Sitzteils 12 oder in die entgegengesetzte Richtung bewegt um die durch die Verstellvorrichtung 20 vorgegebene Drehachse. Denkbar ist auch, dass es mehrere Drehachsen gibt oder dass ein Betätigungsmittel wie das Handrad an anderer Stelle angebracht ist. Alternativ ist die Verstellvorrichtung 20 durch eine Klinke statt über ein Handrad bedienbar.

**Figur 2** zeigt eine schematische Prinzipskizze einer beispielhaften Ausführungsform der vorliegenden Erfindung. Eine Oberfläche 2, die zum Kontakt mit einer weiteren, nicht dargestellten Oberfläche vorgesehen ist, soll strukturiert werden. Die Oberfläche 2 kann dabei eine Oberfläche 2 eines Kopplungsmittels 4 sein oder eine Oberfläche 2 eines ersten Beschlagteils 5 oder zweiten Beschlagteils 6 oder eine Oberfläche 2 einer weiteren, zum Abwälzen vorgesehenen Komponente der Verstellvorrichtung. Aus einem nicht dargestellten Laser, beispielsweise einem gütegeschaltetem Laser, werden zwei kollimierte und kohärente Laserstrahlen 1,1' entkoppelt, beispielsweise über einen Strahlteiler, und im Bereich der zu strukturierenden Oberfläche 2 zur Überschneidung gebracht. Der erste Laserstrahl 1 und der zweite Laserstrahl 1' sind hier der Einfachheit halber lediglich schematisch eingezeichnet. In dem Überschneidungsbereich interferieren der erste Laserstrahl 1 und der zweite Laserstrahl 1' derart, dass gemäß dem einstellbaren Interferenzmuster die Oberfläche 2 lokal strukturiert wird. Dabei bewegt sich die Ausdehnung der Strukturierungszone in der Größenordnung von wenigen Quadratmillimetern bis zu wenigen Quadratzentimetern. Die genaue Größe kann dabei durch die Kollimation der Laserstrahlen 1,1' eingestellt werden. Die Tiefe, bis zu der das Material der Oberfläche 2 strukturiert wird, ist dabei unter anderem abhängig sowohl von dem Material als auch von der verwendeten Laserleistung und ist dementsprechend über wenigstens die beiden genannten Parameter einstellbar. Beispielsweise sind Strukturhöhen von Bruchteilen von Mikrometern erzeugbar, insbesondere sind Strukturhöhen in der Größenordnung von 100nm oder 500nm oder 1µm erzeugbar. Die Strukturen können vielfältige Formen aufweisen. Da die Strukturen über eine lokale Aufschmelzung des Oberflächenmaterials erzeugt werden, verbunden mit einem wenigstens teilweisen Verdampfen des Materials, ist die Strukturform unter anderem über die Prozessgeschwindigkeit und die Abkühlrate kontrollierbar. Als Strukturen sind beispielsweise eine Vielzahl von regelmäßigen Gräben oder Kugeln denkbar. Diese können beispielsweise als mikroskopische Schmierstoffreservoire genutzt werden, beispielsweise für fluide Schmierstoffe. Die direkte Laserstrahlinterferenzstrukturierung erzeugt somit mikroskopische oder gar nanoskopische Strukturen in einem makroskopischen Flächenbereich. Dabei werden auch komplexe Strukturen in einem einzigen Prozessschritt erzeugt.

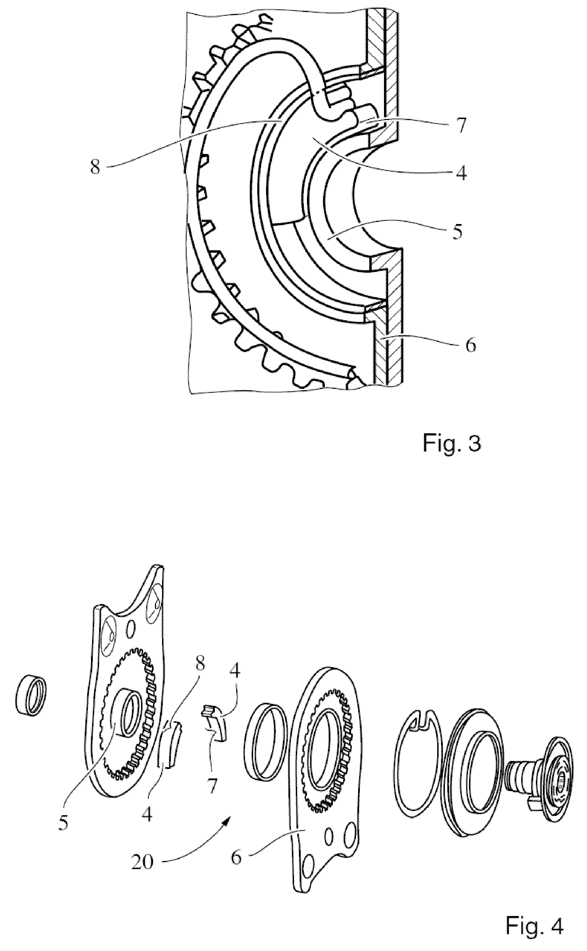

In **Figur 3** ist eine schematische Detailansicht einer beispielhaften dritten Ausführungsform der vorliegenden Erfindung dargestellt. Dargestellt ist eine perspektivische Detailansicht in einer Schnittdarstellung einer erfindungsgemäßen Verstellvorrichtung 20. Ein erstes Beschlagteil 5 wird relativ zu einem zweiten Beschlagteil 6 gedreht. Um eine unbeabsichtigte Verstellung zu verhindern, weist die Verstellvorrichtung 20 ein oder mehrere Kopplungsmittel 4 auf, die in einem ersten Kontaktbereich mit einer Innenseite 7 reibend mit dem ersten Beschlagteil 5 und in einem zweiten Kontaktbereich mit einer Außenseite 8 mit dem zweiten Beschlagteil 6 zusammenwirken und so das erste Beschlagteil 5 mit dem zweiten Beschlagteil 6 koppeln. Im stationären Zustand wird dabei eine Verstellung durch die Haftreibung der Innenseite 7 mit dem ersten Beschlagteil 5 bzw. der Außenseite 8 mit dem zweiten Beschlagteil 6 ausgeschlossen. Um eine möglichst gute Haftreibung zu gewährleisten, sind Kopplungsmittel 4 und erstes Beschlagteil 5 sowie zweites Beschlagteil 6 aus dem gleichen Material gefertigt, hier beispielsweise Stahl. Eine beabsichtigte Verstellung führt zu einer Bewegung der Beschlagteile 5, 6 relativ zu dem Kopplungsmittel 4, wodurch die Haftreibung in eine Gleitreibung übergeht. Diese Gleitreibung soll möglichst gering sein, damit ein Benutzer zu einer Verstellung nur geringe Kräfte aufwenden muss und die Wärmeentwicklung und der Verschleiß der Vorrichtung reduziert werden. Dazu wird die Innenseite 7 und die Außenseite 8 des Kopplungsmittels 4 gemäß dem in **Figur 2** erläuterten Verfahren strukturiert. Somit ist eine geringe Gleitreibung bei gleichzeitig hoher Haftreibung (durch die Materialpaarung Stahl-Stahl) möglich.

In **Figur 4** ist eine schematische Explosionsdarstellung der beispielhaften dritten Ausführungsform der vorliegenden Erfindung dargestellt. Die Ausführungsform entspricht der Ausführungsform, die in **Figur 3** dargestellt ist. Es sind hier das erste Beschlagteil 5 sowie das zweite Beschlagteil 6 einer Verstellvorrichtung 20 dargestellt. Gemäß der dargestellten Ausführungsform weist die Verstellvorrichtung 20 zwei Kopplungsmittel 4 auf.

### Bezugszeichenliste

- 1: erster Laserstrahl
- 1': zweiter Laserstrahl
- 2: Oberfläche
- 3: Strukturierungszone
- 4: Kopplungsmittel
- 5: erstes Beschlagteil
- 6: zweites Beschlagteil
- 7: Innenseite des Kopplungsmittels
- 8: Außenseite des Kopplungsmittels
- 10: Fahrzeugsitz
- 11: Rückenlehne
- 12: Sitzteil
- 20: Verstellvorrichtung

## Patentansprüche

1. Verstellvorrichtung (20), insbesondere für die Lehnenneigungsverstellung eines Fahrzeugsitzes (10), welche ein erstes Beschlagteil (5) und ein zweites Beschlagteil (6) aufweist, wobei das erste Beschlagteil (5) relativ zum zweiten Beschlagteil (6) um eine Drehachse drehbar ist und wobei die Verstellvorrichtung (20) wenigstens ein Kopplungsmittel (4) zur Kopplung des ersten Beschlagteils (5) und des zweiten Beschlagteils (6) aufweist, **dadurch gekennzeichnet, dass** wenigstens ein Teil einer Oberfläche (2) des Kopplungsmittels (4)
und/oder des ersten Beschlagteils (5) und/oder des zweiten Beschlagteils (6) eine Strukturierung (3) aufweist, wobei die Strukturierung (3) in einem ersten Kontaktbereich zwischen dem Kopplungsmittel (4) und dem ersten Beschlagteil (5) und/oder in einem zweiten Kontaktbereich zwischen dem Kopplungsmittel (4) und dem zweiten Beschlagteil (6) ausgebildet ist, wobei das Kopplungsmittel (4) und das erste Beschlagteil (5) und/oder das zweite Beschlagteil (6) aus dem gleichen Material gefertigt sind.

2. Verstellvorrichtung (20) nach einem Anspruch 1, wobei die Strukturierung (3) derart ausgebildet ist, dass die strukturierte Oberfläche (2) einen geringeren Gleitreibungskoeffizienten aufweist als im unstrukturierten Zustand.

3. Verstellvorrichtung (20) nach einem der vorhergehenden Ansprüche, wobei wenigstens in einem Teil der durch die Strukturierung (3) erzeugten Strukturen ein Schmierstoff vorgesehen ist.

4. Verstellvorrichtung (20) nach einem der vorhergehenden Ansprüche, wobei die Strukturierung (3) als eine Vielzahl von halbkugelartigen Einbuchtungen der Oberfläche (2) realisiert ist.

5. Verstellvorrichtung (20) nach Anspruch 3,
wobei die Strukturierung (3) derart ausgebildet ist, dass die erzeugten Strukturen (3) als Schmierstoffreservoire dienen.

6. Verstellvorrichtung (20) nach Anspruch 3,
wobei die erzeugten Strukturen (3) eine Größenordnung von 1 nm bis 100µm aufweisen.

7. Fahrzeugsitz (10) aufweisend eine Verstellvorrichtung (20) nach einem der vorhergehenden Ansprüche.

8. Verfahren zur Herstellung einer Verstellvorrichtung (20), insbesondere nach einem der vorhergehenden Ansprüche, wobei in einem ersten Verfahrensschritt ein Kopplungsmittel (4), ein erstes Beschlagteil (5) und ein zweites Beschlagteil (6) der Verstellvorrichtung (20) gefertigt werden, **dadurch gekennzeichnet, dass** in dem ersten Verfahrensschritt das Kopplungsmittel (4) und das erste Beschlagteil (5) und/oder das zweite Beschlagteil (6) aus dem gleichen Material gefertigt werden, und dass in einem zweiten Verfahrensschritt wenigstens ein Teil einer Oberfläche (2) des Kopplungsmittels (4) und/oder des ersten Beschlagteils (5) und/oder des zweiten Beschlagteils (6) strukturiert wird, wobei die Strukturierung (3) in einem ersten Kontaktbereich zwischen dem Kopplungsmittel (4) und dem ersten Beschlagteil (5) und/oder in einem zweiten Kontaktbereich zwischen dem Kopplungsmittel (4) und dem zweiten Beschlagteil (6) vorgenommen wird, wobei in einem dritten Schritt das erste Beschlagteil (5), das zweite Beschlagteil (6) und das Kopplungsmittel (4) zur Verstellvorrichtung (20) montiert werden.

9. Verfahren nach Anspruch 8, wobei in dem zweiten und/oder dritten Schritt ein Schmierstoff in wenigstens einen Teil der strukturierten Oberfläche eingebracht wird.

10. Verfahren nach einem der Ansprüche 8 oder 9, wobei im zweiten Schritt zur Strukturierung (3) der Oberflächen (2) eine direkte Laserinterferenzstrukturierung (3) verwendet wird, wobei insbesondere in einem ersten Teilschritt zwei kohärente und kollimierte Laserstrahlen (1, 1'), vorzugsweise der gleichen Laserquelle, auf den zu strukturierenden Oberflächen (2) im Bereich einer Strukturierungszone (3) überlagert werden und in einem zweiten Teilschritt die Strukturierungszone (3) durch Bewegung der Laserstrahlen (1, 1') und/oder der zu strukturierenden Oberfläche (2) erzeugt wird.

## Claims

1. Adjusting device (20), in particular for the backrest inclination adjustment of a vehicle seat (10), which has a first fitting member (5) and a second fitting member (6), wherein the first fitting member (5) can be rotated relative to the second fitting member (6) about a rotation axis and wherein the adjusting device (20) has at least one coupling means (4) for coupling the first fitting member (5) and the second fitting member (6), **characterized in that** at least a portion of a surface (2) of the coupling means (4) and/or the first fitting member (5) and/or the second fitting member (6) has a structuring (3), wherein the structuring (3) is formed in a first contact region between the coupling means (4) and the first fitting member (5) and/or in a second contact region between the coupling means (4) and the second fitting member (6), wherein the coupling means (4) and the first fitting member (5) and/or the second fitting member (6) are produced from the same material.

2. Adjusting device (20) according to Claim 1, wherein the structuring (3) is constructed in such a manner that the structured surface (2) has a lower sliding friction coefficient than in the unstructured state.

3. Adjusting device (20) according to either of the preceding claims, wherein a lubricant is provided in at least one portion of the structures produced by the structuring (3).

4. Adjusting device (20) according to one of the preceding claims, wherein the structuring (3) is produced as a large number of semi-spherical recesses of the surface (2).

5. Adjusting device (20) according to Claim 3, wherein the structuring (3) is constructed in such a manner that the structures (3) produced act as lubricant reservoirs.

6. Adjusting device (20) according to Claim 3, wherein the structures (3) produced have an order of magnitude of from 1 nm to 100 µm.

7. Vehicle seat (10) having an adjusting device (20) according to one of the preceding claims.

8. Method for producing an adjusting device (20), in particular according to one of the preceding claims, wherein a coupling means (4), a first fitting member (5) and a second fitting member (6) of the adjusting device (20) are produced in a first method step, **characterized in that** the coupling means (4) and the first fitting member (5) and/or the second fitting member (6) are produced from the same material in the first method step, and **in that** at least a portion of a surface (2) of the coupling means (4) and/or the first fitting member (5) and/or the second fitting member (6) is structured in a second method step, wherein the structuring (3) is carried out in a first contact region between the coupling means (4) and the first fitting member (5) and/or in a second contact region between the coupling means (4) and the second fitting member (6), wherein the first fitting member (5), the second fitting member (6) and the coupling means (4) are assembled to form the adjusting device (20) in a third step.

9. Method according to Claim 8, wherein, in the second and/or third step, a lubricant is introduced into at least a portion of the structured surface.

10. Method according to either Claim 8 or Claim 9, wherein, in the second step for structuring (3) the surfaces (2), a direct laser interference structuring (3) is used, wherein in particular in a first part-step two coherent and collimated laser beams (1 1'), preferably of the same laser source, are superimposed on the surfaces (2) to be structured in the region of a structuring zone (3), and the structuring zone (3) is produced in a second part-step by moving the laser beams (1, 1') and/or the surface (2) to be structured.

## Revendications

1. Dispositif de réglage (20) notamment pour le réglage de l'inclinaison du dossier d'un siège de véhicule (10), lequel comporte une première pièce de ferrure (5) et une deuxième pièce de ferrure (6), la première pièce de ferrure (5) étant rotative autour d'un axe de rotation par rapport à la deuxième pièce de ferrure (6) et le dispositif de réglage (20) comportant au moins un moyen de couplage (4) pour coupler la première pièce de ferrure (5) et la deuxième pièce de ferrure (6), **caractérisé en ce qu'**au moins une partie d'une surface (2) du moyen de couplage (4) et/ou de la première pièce de ferrure (5) et/ou de la deuxième pièce de ferrure (6) comporte une structuration (3), la structuration (3) étant conçue dans une première région de contact entre le moyen de couplage (4) et la première pièce de ferrure (5) et/ou dans une deuxième région de contact entre le moyen de couplage (4) et la deuxième pièce de ferrure (6), le moyen de couplage (4) et la première pièce de ferrure (5) et/ou la deuxième pièce de ferrure (6) étant fabriqués dans la même matière.

2. Dispositif de réglage (20) selon la revendication 1, la structuration (3) étant conçue de telle sorte que la surface (2) structurée fasse preuve d'un coefficient de friction de glissement plus faible que dans l'état non structuré.

3. Dispositif de réglage (20) selon l'une quelconque des revendications précédentes, au moins dans une partie des structures créées par la structuration (3), il est prévu un lubrifiant.

4. Dispositif de réglage (20) selon l'une quelconque des revendications précédentes, la structuration (3) étant réalisée sous la forme d'une pluralité de creux demi-sphériques de la surface (2).

5. Dispositif de réglage (20) selon la revendication 3, la structuration (3) étant conçue de telle sorte que les structures (3) créées fassent office de réservoirs à lubrifiant.

6. Dispositif de réglage (20) selon la revendication 3, les structures créées (3) étant d'un ordre de grandeur de 1 nm à 100 µm.

7. Siège de véhicule (10) comportant un dispositif de réglage (20) selon l'une quelconque des revendications précédentes.

8. Procédé destiné à la fabrication d'un dispositif de réglage (20), notamment selon l'une quelconque des revendications précédentes, dans une première étape de procédé, un moyen de couplage (4), une première pièce de ferrure (5) et une deuxième pièce de ferrure (6) du dispositif de réglage (20) étant fabriqués, **caractérisé en ce que** dans la première étape de procédé, on fabrique de la même matière le moyen de couplage (4) et la première pièce de ferrure (5) et/ou la deuxième pièce de couplage (6) et **en ce que** dans une deuxième étape de procédé, on structure au moins une partie d'une surface (2) du moyen de couplage (4) et/ou de la première pièce de ferrure (5) et/ou de la deuxième pièce de ferrure (6), la structuration (3) étant réalisée dans une première région de contact entre le moyen de couplage (4) et la première pièce de ferrure (5) et/ou dans une deuxième région de contact entre le moyen de couplage (4) et la deuxième pièce de ferrure (6), alors que lors d'une troisième étape, on monte la première pièce de ferrure (5), la deuxième pièce de ferrure (6) et le moyen de couplage (4) pour obtenir le dispositif de réglage (20).

9. Procédé selon la revendication 8, dans une deuxième et/ou dans une troisième étape, un lubrifiant étant introduit dans au moins une partie de la surface structurée.

10. Procédé selon l'une quelconque des revendications 8 ou 9, dans une deuxième étape pour la structuration (3) des surfaces (2) étant utilisée une structuration (3) directe par interférence laser, notamment lors d'une première étape partielle, deux rayons laser (1, 1') cohérents et collimatés, provenant de préférence de la même source laser étant superposés sur les surfaces (2) qui doivent être structurées, dans la région d'une zone de structuration (3) et dans une deuxième étape partielle, la zone de structuration (3) étant créée par déplacement des rayons laser (1, 1') et/ou de la surface (2) qui doit être structurée.
